# EUROPEAN PATENT SPECIFICATION

(11) **EP 2 917 071 B1**
(45) Date of publication and mention of the grant of the patent: **15.05.2019**
(21) Application number: 13811590.2
(22) Date of filing: 05.11.2013
(51) Int. Cl.: B60P 7/08

(54) **RETAINING ASSEMBLY**
HALTEANORDNUNG
ENSEMBLE DE RETENUE

(30) Priority: 09.11.2012 GB 201220220; 04.11.2013 GB 201319399
(43) Date of publication of application: 16.09.2015
(73) Proprietor: Loadhog Limited, Sheffield S9 2SU South Yorkshire (GB)
(72) Inventor: JOWETT, Leigh, Sheffield South Yorkshire S36 9AR (GB); MAKIN, John, Rotherham South Yorkshire S60 5NJ (GB)
(86) International application number: PCT/GB2013/000471
(87) International publication number: WO 2014/072671

(56) References cited:
- EP-A1- 2 383 145
- WO-A1-2005/016689
- DE-A1- 19 944 538
- DE-U1- 20 109 024

## Description

This invention relates to retaining assemblies. More particularly, but not exclusively, this invention relates to retaining assemblies for use with load securing apparatus, for example on lorry trailers. This invention also relates to retaining devices for use with retaining assemblies.

In the haulage industry, palletised loads can be transported by lorries. It is requirements for the loads to be secured to the lorry trailer. Known securing apparatus for this purpose can be difficult to operate, expensive and unreliable.

EP 2 383 145 A1 discloses a tensioning system for securing cargo, and a vehicle provided with such tensioning system.

According to one aspect of this invention, there is provided a retaining device comprising a support for supporting at least one flexible elongate arrangement and engaging means on the support for engaging the flexible elongate arrangement, and thereby retain the flexible elongate arrangement in a desired position relative to the retaining device, characterised in that the engaging means is deformable to allow said movement of the flexible elongate arrangement through the support.

According to another aspect of this invention, there is provided a retaining assembly comprising a retaining device as described above, and a flexible elongate arrangement moveable lengthwise relative to the retaining device.

The support may comprise a frame through which the flexible elongate arrangement can extend. The frame may be substantially triangular.

The engaging means may be attached to the support.

The support may define an aperture through which the flexible elongate arrangement extends. The engaging means may provide a resistance portion in the aperture to provide resistance to the movement of the flexible elongate arrangement therethrough.

The engaging means may comprise a resiliently deformable engaging member, having an end region attached to the support. The engaging member may extend from a first side of the support through the aperture to a second side of the support, the resistance portion comprising a partial occlusion portion of the engaging member, the partial occlusion portion being configured to partially occlude the aperture.

The flexible elongate arrangement may comprise a flexible elongate member and a cooperating portion for to cooperate with the engaging means, wherein the engaging means engages the cooperating portion to resist movement of the elongate arrangement through the support. The cooperating portion may be wider than the flexible elongate member.

The flexible elongate arrangement may comprise a plurality of the cooperating portions on the flexible elongate member. The plurality of cooperating portions may be spaced lengthwise along the flexible elongate member.

The, or each, cooperating portion may comprise a bead on the flexible elongate member. Alternatively, the, or each, cooperating portion may comprise a sleeve on the flexible elongate member. The sleeve or the bead may constitute the cooperating portion of the respective flexible elongate arrangement. The resistance portion may engage the cooperating portion to resist movement of the flexible elongate arrangement through the support.

The engaging means may be attached to the support.

The engaging means may comprise an engaging member. The engaging means may be resiliently deformable, and may have a first end region movable relative to the support on deformation of the engaging means, and a second end region attached to the support.

In one embodiment, the engaging means may be substantially flat. The engaging means may be elongate and may be fixed at one end to the support.

The opposite end may be provided in the respective aperture. The engaging means may comprise a spring. In one embodiment, the engaging means may comprise a cantilever spring.

In another embodiment, the engaging means may extend around the support. In this embodiment, the engaging means may comprise a spring extending around the support.

It will be appreciated that the spring could be any other suitable spring, for example a compression spring, which may be compressed by the movement of the cooperating portion through the support.

The support may define first and second faces. The aperture may extend between the first and second faces. The support may further include a first spacing member projecting from the first face, and a second spacing member projecting from the second face. The first and second spacing members may be provided to space the engaging means from the first and second faces.

The first and second spacing members may be offset relative to each other. The first spacing member may be closer to the resistance portion of the engaging means than the second spacing member

The first end region of the engaging means may extend across the first spacing member. The first spacing member may include guide formations to guide the aforesaid movement of the first end region of the engaging means.

Where the engaging means extends around the support, the engaging means may be wrapped around the first and second spacing members.

The support may define a plurality of apertures through which first and second flexible elongate arrangements can extend. The support may define two apertures through which first and second flexible elongate arrangements can extend. The first and second flexible elongate arrangements may be two regions of the same flexible elongate arrangement.

The retaining device may comprise first and second engaging means. Each of the first and second engaging means may comprise a respective elongate resilient deformable member. Each of the first and second engaging means may have an end attached to the support.

Each of the engaging means may have a resistance portion in the respective first and second apertures to provide resistance to the movement of the flexible elongate arrangements therethrough. Each of the resistance portions may engage the respective cooperating portion to resist movement of the flexible elongate arrangements through the support.

Each of the first and second engaging means may extend from the first face of the support through a respective one of the apertures to the second face of the support. The resistance portion may comprise a partial occlusion portion of the engaging means to partially occlude the aperture.

The support may define a respective first opening to each of the apertures on the first side of the support and a respective second opening to each of the apertures on a second side of the support. Each of the first openings may have a first edge region around which the respective engaging means extends. Each of the second openings may have a second edge region around which the respective engaging means extends. Each of the first edge regions may be closer to the respective engaging means than the respective second edge region.

In one embodiment, the retaining assembly may comprise the first and second flexible elongate arrangements moveable through the retaining device. In this embodiment, respective engaging means may engage both flexible elongate arrangements to retain both flexible elongate arrangements in respective desired positions relative to the retaining device. The first and second flexible elongate arrangements may be two portions of a single flexible elongate article.

The, or each, engaging means may comprise a respective first or second engaging member. The first engaging member may be arranged to engage a first of the plurality of flexible elongate arrangements to retain said first flexible elongate arrangement in the desired position relative to the retaining device. The second engaging member may be arranged to engage the second flexible elongate arrangements to retain said second flexible elongate arrangement in the desired position relative to the retaining device.

The, or each, flexible elongate arrangement may be retained by the retaining device by being held between the support and the engaging means.

Each of the first and second engaging members may comprise a respective resilient deformable member, which, in one embodiment, may be substantially flat. Each of the first and second engaging members may be attached at one end to the support. Each of the first and second engaging members may comprise a cantilever spring.

In one embodiment, the, or each, flexible elongate member may be substantially flat. The flexible elongate member may comprise a webbing material. The flexible elongate member may comprise a strap. In another embodiment, the flexible elongate member may comprise a rope or a cord.

The, or each, flexible elongate arrangement may include a cooperating portion for engagement by the engaging means. The, or each, flexible elongate arrangement may comprise a sleeve or bead on the flexible elongate member for engagement by the engagement means. The sleeve or bead may constitute the cooperating portion of the respective flexible elongate arrangement.

The support may further include a mounting member extending across the frame. The engaging means may be mounted on the mounting member.

The support may define a first region through which the first flexible elongate arrangement can extend, and a second region through which the second flexible elongate arrangement can extend. A separating member may be provided between the first and second region of the support. The first engaging member may be provided in the first region of the support, and the second engaging member may be provided in the second region of the support.

The support may include a third region by means of which the support can be suspended from an appropriate hanger. The hanger may comprise a karabiner, or other suitable means from which the support can be hung.

Embodiments of the invention will now be described by way of example only, with reference to the accompanying drawings, in which:
Figure 1 shows a load securing assembly in a suspended position in which a retaining assembly can be used;
Figure 1A is a close-up of the region marked IA in Figure 1;
Figure 1B is a close-up of the region marked IB in Figure 1, showing a retaining assembly;
Figure 2 shows the load securing assembly in a partial securing position;
Figure 2A is a close-up of the region marked IIA in Figure 2;
Figure 2B is a close-up of the region marked IIB in Figure 2, showing the retaining assembly;
Figure 3 shows the load securing assembly in a full securing position;
Figure 3A is a close-up of the region marked IIIA in Figure 3;
Figure 3B is a close-up of the region marked IIIB in Figure 3;
Figure 3C is a close-up of the region marked IIIC in Figure 3;
Figure 4 shows the load securing assembly having been returned to the suspended position;
Figure 4A is a close-up of the region marked IVA in Figure 4;
Figure 4B is a close-up of the region marked IVB in Figure 4;
Figure 5 is a front plan view of a first embodiment of a retaining device;
Figure 6 is a view along the line VI - VI in Figure 5;
Figure 7 is a perspective view of the retaining device;
Figure 8 is a perspective view of a second embodiment of the retaining assembly;
Figure 9 is a front plan view of the retaining device forming part of the retaining g assembly shown in Figure 8; and
Figure 10 is a side view of the retaining device shown in Figure 9.

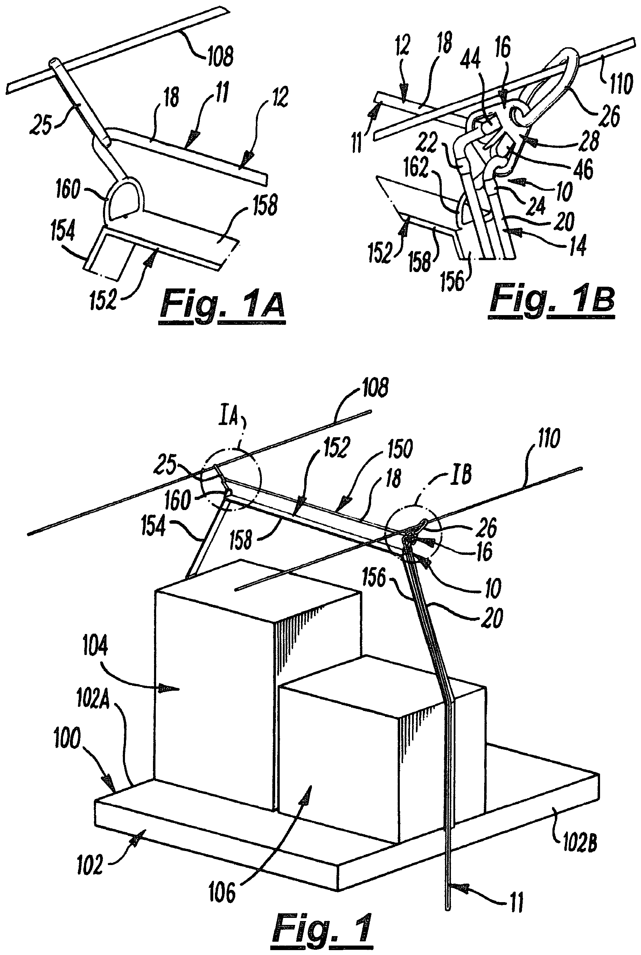

Figure 1 shows diagrammatically a trailer bed 100 of a lorry trailer 102, on which two palletised loads 104, 106 are mounted. The lorry trailer 102 includes first and second catenaries 108, 110 arranged in the ceiling region at respective first and second opposite sides 102A, 102B of the lorry trailer 102.

Figure 1 also shows a load securing apparatus 150 in a suspended position. The load securing apparatus 150 is provided to secure the loads 104, 106 to the trailer bed 100. The load securing apparatus 150 is mounted on the catenaries 108,110 and comprises a strap arrangement 152 having a first region 154 and a second region 156. The strap arrangement 152 further includes a central region 158 extending between the first and second regions 154, 156.

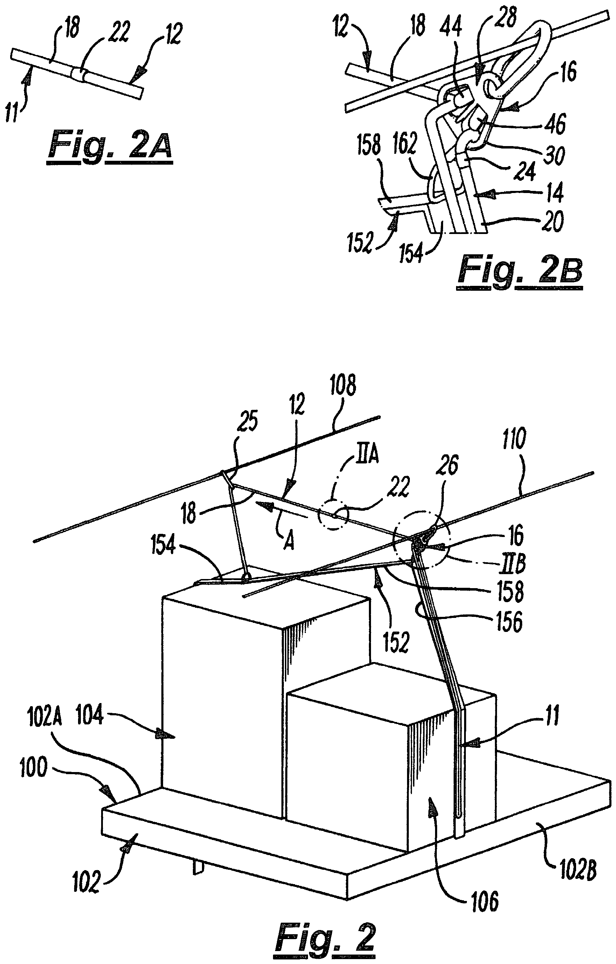

The strap arrangement 152 can be moved from the suspended position shown in Figure 1, in which the load securing assembly 150 is suspended from the catenaries 108, 110 to a partial securing position, shown in Figure 2 in which the first region 154 of the strap arrangement 152 is secured to the lorry trailer 102.

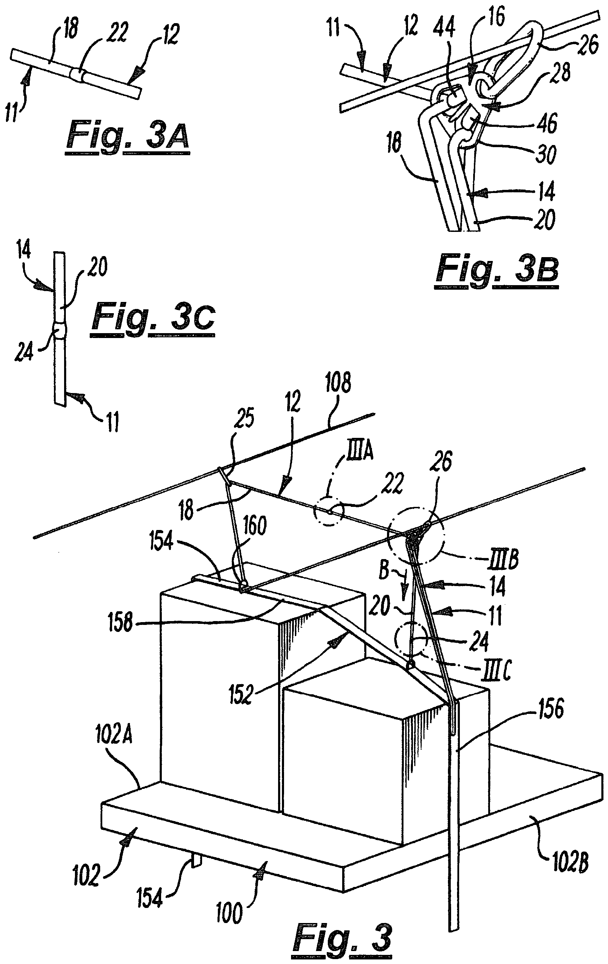

The load securing assembly 150 is also moveable from the partial securing position to a full securing position shown in Figure 3, in which both end regions 154, 156 are secured to the lorry trailer 102 and the strap arrangement 152 is tightly secured across the loads 104, 106.

As shown in Figure 1, the load securing apparatus 150 includes a retaining assembly 10 which comprises first and second flexible elongate arrangements 12, 14 and a retaining device 16, through which the first and second flexible elongate arrangements 12, 14 extend.

The retaining assembly 10 retains the flexible elongate arrangements 12, 14 in the positions shown in Figure 1 and hence retains the strap arrangement 152 in the suspended position

In the embodiment described herein, the first and second flexible elongate arrangements 12, 14 are two regions of a single flexible elongate article 11. Each flexible elongate arrangement 12, 14 comprises a flexible elongate member 18 or 20. Each flexible elongate member 18, 20 may be in the form of a strap or a rope or a cord. In one embodiment, the flexible elongate member 18, 20 may be formed of a webbing material.

In a first embodiment, each flexible elongate arrangement 12, 14 further comprises a respective cooperating portion in the form of a sleeve 22 or 24 provided on the respective flexible elongate member 18, 20 (see Figure 1B). The sleeves 22, 24 provide a widened region on the respective flexible elongate members 18, 20. The purpose of the sleeves 22, 24 is described in more detail below.

In Figure 1, with the strap arrangement 152 in a suspended position, the first flexible elongate member 18 extends downwardly from the retaining device 16 in one direction and along the central region 158 in the opposite direction to an upper end of the first region 154 of the strap arrangement 152.

As shown more clearly in Figure 1A, the first flexible elongate member 18 extends through a first karabiner 25 slideably mounted on the first catenary 108. The first flexible elongate member 18 extends downwardly from the first karabiner 25 and is attached to the strap arrangement 152 at a first D-ring 160 mounted on the strap arrangement 152 at the upper end of the first region 154.

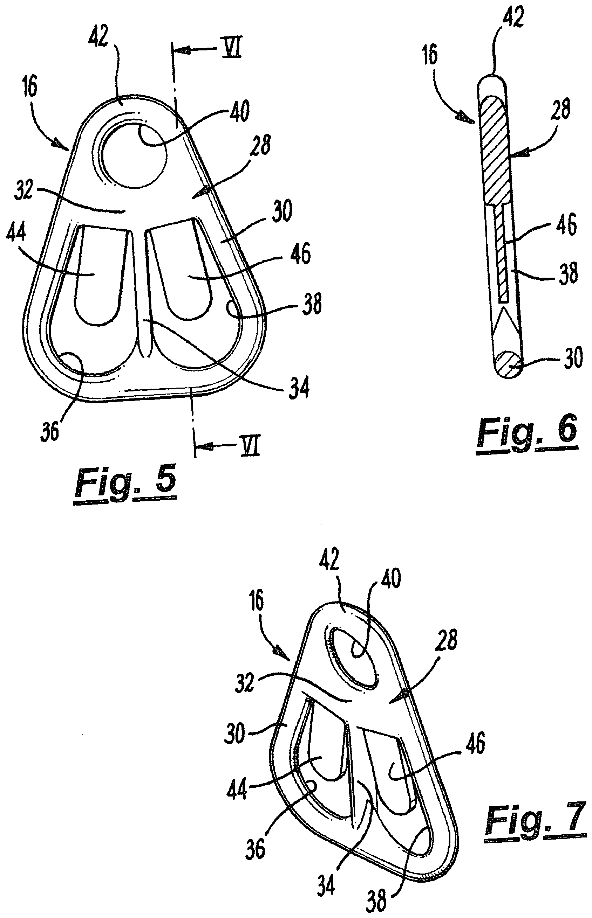

As shown in Figures 1 and 1B, the retaining device 16 is suspended from the second catenary 110 by a second karabiner 26. A first embodiment of the retaining device 16 is shown more clearly in Figures 5, 6 and 7, and comprises a support 28 for supporting the first and second flexible elongate arrangements 12, 14.

The support 28 comprises a substantially triangular frame 30, a mounting member 32 extending across the frame 30 and a separating member 34.

The support 28 defines a first aperture 36 between one side of the frame 30 and the separating member 34. The support 28 also defines a second aperture 38 between the opposite side of the frame 30 and the separating member 34. A third aperture 40 is defined in the support 28 adjacent the apex 42 of the frame 30. The second karabiner 26 extends through the third aperture 40, as shown in Figures 1B, 2B, 3B and 4B.

The second catenary 110 extends through the second karabiner 26, thereby suspending the retaining device 16 from the second catenary 110.

Figures 1B, 2B, 3B and 4B show that the first flexible elongate arrangement 12 extends through the first region 36 of the support 28, and the second flexible elongate arrangement 14 extends through the second region 38 of the support 28.

The second flexible elongate arrangement 14 is attached to the strap arrangement 152 at a second D-ring 162 mounted on the strap arrangement 152 at the upper end of the second region 156.

The retaining device 16 further includes first and second engaging means in the form of respective first and second substantially flat engaging members 44, 46. The first engaging member 44 is provided in the first region 36 of the support 28, and the second engaging member 46 is provided in the second region 38 of the support 28.

Each of the first and second engaging members 44, 46 is in the form of a cantilever spring and is mounted at one end thereof to the mounting member 32. The free end of each of the first and second engaging members 44, 46 engages a respective one of the first and second flexible elongate arrangements 12, 14.

The first and second flexible elongate arrangements 12, 14 are retained in the position shown in Figures 1, 1A and 1B by the engagement of the respective sleeves 22, 24 by the first and second engaging members 44, 46.

The effective widening of the first and second flexible elongate members 18, 20 by the respective sleeves 22, 24 means that the force required to pull the sleeves 22, 24 through the retaining device 16 is greater as the first and second sleeves 22, 24 are pulled through the retaining device 10, than it is for the rest of the first and second flexible elongate members 18, 20. This has the effect of retaining the sleeves 22, 24 on one side of the retaining device 16 unless a force of sufficient magnitude is applied to the flexible elongate arrangement 12, 14 to pull the respective sleeve 22, 24 through the retaining device 16, against the force of the engaging members 44, 46.

The first and second engaging members 44, 46 are resiliently deformable so that by pulling the first and second flexible elongate arrangements in the directions indicated by the arrow A in Figure 2 and arrow B in Figure 3, the first and second sleeves 22, 24 push against the engaging members 44, 46. This deforms the engaging members 44, 46 to a position that allows the sleeves 22, 24 to pass through the frame 30.

The sleeves 22, 24 are fixedly attached to the flexible elongate members 18, 20 and thus, when the sleeves 22, 24 pass through the support 16, the flexible elongate arrangements 12, 14 can be in the first directions indicated by the arrow A in Figure 2 and arrow B in Figure 3.

In use, when it is desired to secure the loads 104, 106 to the lorry trailer 102, the user can move to the first side of the lorry trailer 102 and pull downwardly on the first region 154 of the strap arrangement 152. This pulls the first flexible elongate arrangement 12 through the support 28 in the direction of the arrow A and the first sleeve 22 passes through the support 28 deforming the first engaging member 44.

The first flexible elongate arrangement 12 moves to the partial securing position shown in Figure 2, with the first sleeve 22 arranged substantially midway between the first and second karabiners 25, 26. The first sleeve 22 is shown in Figures 2A and 2B.

The first region 154 of the strap arrangement 152 drops onto the loads 104, 106, as shown in Figure 2. The first region 154 is provided with appropriate hook means thereon (not shown), thereby allowing the strap arrangement 152 to be attached to the lorry trailer 102 at the first side, thereby partially securing the strap arrangement 152 to the trailer bed 100.

The user can then move to the second side of the lorry trailer 102 and pull downwardly on the second region 156 of the strap arrangement 152. This has the effect of pulling the second flexible elongate arrangement through the support 28 in the direction of the arrow B in Figure 3 so that the second sleeve 24 passes through the support 28, deforming the second engaging member 46. The second region 154 of the strap arrangement 152 drops onto the loads 104, 106, and the second sleeve moves to the position shown in Figures 3 and 3C.

A further suitable hook means (not shown) is provided on the second region 156 of the strap arrangement 152 thereby allowing the strap arrangement 152 to be fully secured to the trailer bed 100. The hook means at the end of the second region 156 of the strap arrangement 152 has appropriate adjustment means (not shown) to allow the strap arrangement 152 to be tightened across the loads 104, 106.

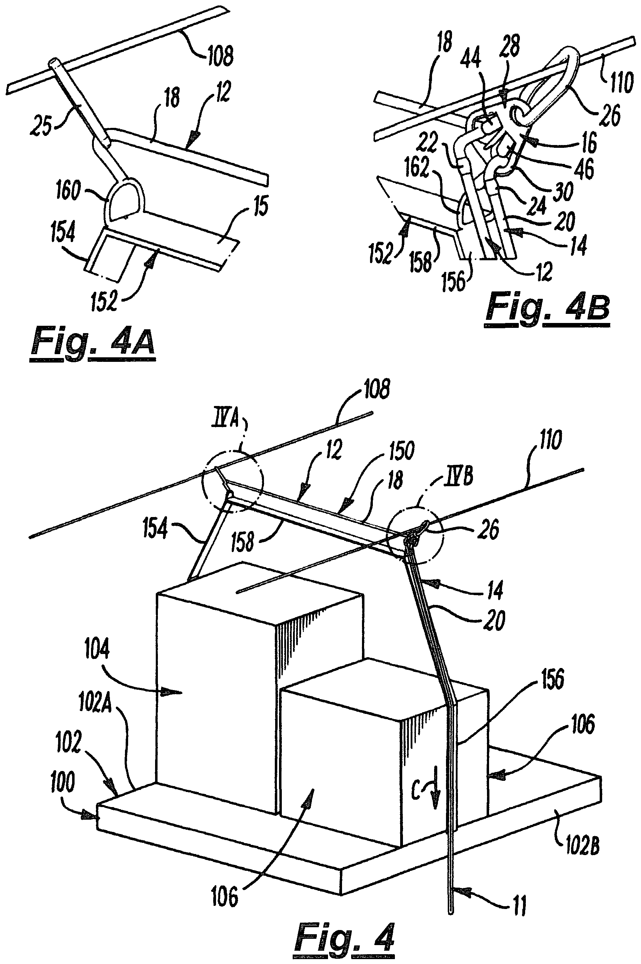

When it is desired to release the strap arrangement 152 from the loads 104, 106, the user releases the hook means at each of the first and second regions 154, 156 and pulls downwardly on the flexible elongate arrangements 18, 20, as indicated by the arrow C in Figure 4. This pulls the first and second flexible elongate arrangements 12, 14, so that the first and second sleeves 22, 24 on the first and second flexible elongate arrangements 18, 20 are pulled through the support 28 by deforming the respective first and second engaging members 44, 46.

When the first and second sleeves 22, 24 have been pulled through the support 28 as aforesaid, the first and second flexible elongate arrangements 12, 14 are thereby retained once more by the retaining device 16, and the strap arrangement 152 is returned to the suspended position.

There is thus described a retaining device 16 and a retaining assembly 10 which can be used with a strap arrangement 152 to secure a load to a lorry trailer and released therefrom easily and effectively.

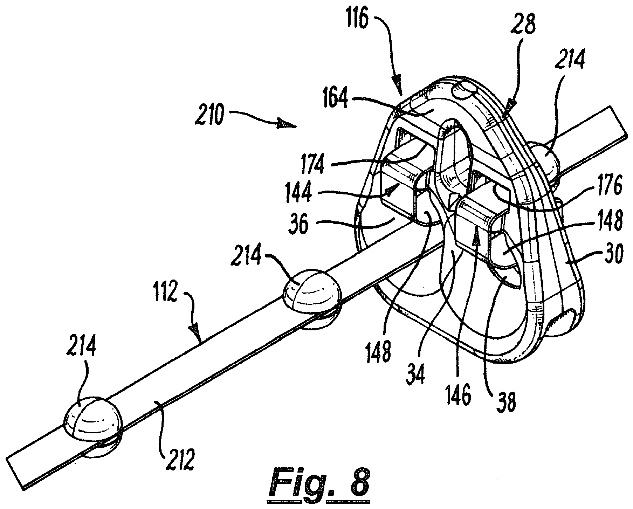

A second embodiment of the retaining assembly, generally designated 210, is shown in Figures 8 to 10, which includes many of the features of the retaining assembly 10 shown in Figures 5 to 7. These features have been designated with the same reference numerals as the corresponding features in Figures 5 to 7.

The embodiment of the retaining assembly 210 shown in Figures 8 to 10 differs from the retaining assembly 10 shown in Figures 5 to 7 in that the retaining assembly 210 comprises a retaining device 116, which includes first and second engaging members 144, 146 in the form of springs.

In the embodiment shown, the first and second engaging members 144, 146 are formed of respective metal strips bent around the edges of the apertures 36, 38.

Each engaging member 144, 146 extends through a respective one of the apertures 36, 38 and provides a resistance portion 148 in the respective aperture 36, 38, to partially occlude the apertures 36, 38.

The support 28 has first and second faces 164, 166. A first spacing member 168 projects outwardly form the first face 164. A second spacing member 170 projects outwardly from the second face 166. The engaging members 144, 146 are wrapped around the spacing members 164, 166.

The spacing members 164, 166 space the engaging members 144, 146 from the support, thereby maximising the resilience of the engaging members 144, 146. The engaging members 144, 146 are resiliently deformable, and each has a first end region 147A movable relative to the support 28 on deformation of the respective first and second engaging members 144, 146.

Each of the engaging members 144, 146 has a second end region 147B which extends into the respective securing aperture 174, 176 to engage the support 28 therein, thereby securing each engaging member 144, 146 to the support 28.

Each first spacing member 168 has a pair of spaced guide walls 178 between which the first end region 147A is disposed. The guide walls 278 guide the first end region 147A of each engaging member 144, 146 when the respective engaging member 144, 146 is resiliently deformed.

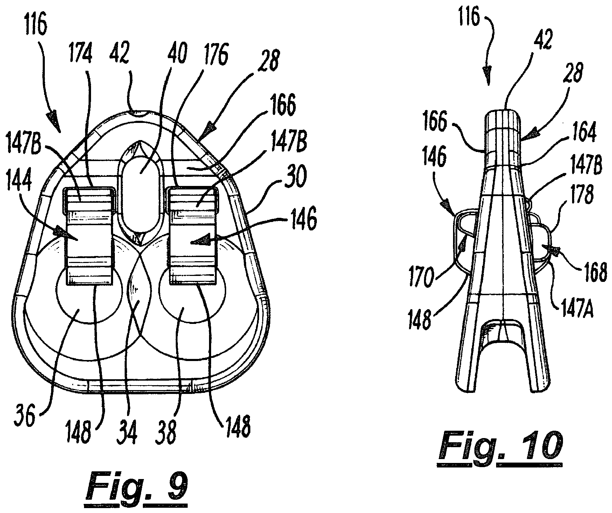

As can be seen from Figure 10, the first and second spacing members 168, 170 are offset relative to each other. In Figure 10, the first spacing member 168 is shown offset below the second spacing member 170. It will be appreciated that the term "below" is used for ease of reference and relates to the orientation of the retaining device 116 in Figure 10.

The retaining assembly 210 further includes first and second elongate arrangements, only one of which is shown, generally designated 112. The elongate arrangement 112 comprises a flexible elongate member 212 formed of a webbing material. In the second embodiment shown, the flexible elongate member 212 may be in the form of a strap.

In the second embodiment, cooperating portions in the form of beads 214 are attached to the flexible elongate member 212 in a spaced relationship. The drawings show three beads 214, but it will be appreciated that any suitable number of beads 214 can be provided. The beads 214 have the same function as the sleeve 22 or 24 described above. The provision of more than one bead 214 or sleeve 22, 24 provides the advantage in the embodiments described herein that the elongate arrangements 12, 14, 212 can be used with catenaries 108, 110 that are spaced from each other by differing distances in different lorry trailers 102.

When the flexible elongate member 212 is pulled through the aperture 36, the beads 214 engage the resistance portion 148 of the first engaging member 144. The effect of this is that the force pulling on the flexible elongate member 212 has to be increased in order to pull the beads 214 through the aperture 36.

Thus, the interaction between the beads 214 and the engaging members 144, 146 has the effect of retaining one or more of the beads 214 on one side or other of the retaining device 210, depending upon the direction in which the beads 214 and the flexible elongate member 212 was last pulled through the aperture 36 or 38.

Various modifications can be made without departing from the scope of the invention. For example, the support 28 does not need to be triangular. Also, the single flexible elongate article 11 may comprise two separate elongate arrangements. In another modification, the support may define only one aperture and may have only one engaging member to engage the bead or sleeve. In a further modification, the engaging member may comprise a compression, or other suitable spring. The D-rings 160, 162 may be replaced by other suitable means capable of performing the same function as the D-rings 160, 162. Any suitable number of sleeves or beads can be provided on the elongate members the sleeves 22, 24 or the beads 214 could be replaced by any suitable means capable of providing a widened region on the flexible elongate members 18, 20,

## Claims

1. A retaining device (16, 116) comprising a support (28) for supporting at least one flexible elongate arrangement (12, 14) and engaging means (44, 46, 144, 146) on the support (28) for engaging the flexible elongate arrangement (12, 14), and thereby retain the flexible elongate arrangement (12, 14) in a desired position relative to the retaining device (16, 116), **characterised in that** the engaging means (44, 46, 144, 146) is deformable to allow said movement of the flexible elongate arrangement (12, 14) through the support (28).

2. A retaining device according to claim 1, wherein the support (28) comprises a frame (30) through which the flexible elongate arrangement (12, 14) can extend, and the support (28) further includes a mounting member (32) extending across the frame (30), the engaging means (44, 46, 144, 146) being mounted on the mounting member (32).

3. A retaining device according to claim 2, wherein the support (28) defines an aperture (36, 38) through which the flexible elongate arrangement (12, 14) can extend, the engaging means (44, 46, 144, 146) having a resistance portion (148) in the aperture (36, 38) to provide resistance to the movement of the flexible elongate arrangement (12, 14) therethrough.

4. A retaining device according to claim 3, wherein the engaging means (44, 46, 144, 146) is resiliently deformable, and has a first end (147A) movable relative to the support (28) on deformation of the engaging means (44, 46, 144, 146), and a second end (147B) attached to the support (28).

5. A retaining device according to claim 4, wherein the engaging means (44, 46, 144, 146) extends from a first side of the support (28) through the aperture (36, 38) to a second side of the support (28), the resistance portion (148) comprising a raised region of the engaging means (44, 46, 144, 146) in the aperture (36, 38).

6. A retaining device according to claim 5, wherein the support (28) defines first and second faces (164, 166), the aperture (36, 38) extending between the first and second faces (164, 166), the support (28) further including respective first spacing member (168) projecting from the first face (164), and a second spacing member (170) projecting from the second face (166), the first and second spacing members (168, 170) being provided to space the engaging means (44, 46, 144, 146) from the first and second faces (164, 166), and wherein the first and second spacing members (168, 170) are offset relative to each other, the first spacing member (168) being closer to the resistance portion (148) of the engaging means than the second spacing member, first end of the engaging means extending across the respective first spacing member (170), and the first spacing member (168) including guide formations (178) to guide the aforesaid movement of the first end (147A) of the engaging means (44, 46, 144, 146).

7. A retaining device according to any of claims 4 to 6, wherein the retaining device (16, 116) comprises first and second resiliently deformable engaging means (44, 46, 144, 146) to engage a respective flexible elongate arrangement (12, 14) to retain each of the flexible elongate arrangements (12, 14) in respective desired positions relative to the retaining device (16, 116), and wherein the support (28) defines first and second apertures (36, 38) through each of which a respective flexible elongate arrangement (12, 14) can extend.

8. A retaining device according to claim 7, wherein each of the first and second engaging means (44, 46, 144, 146) comprises a respective elongate resilient deformable member (44, 46, 144, 146), each of the first and second engaging means (44, 46, 144, 146) being attached at one end to the support (28).

9. A retaining device according to claim 7 or 8, wherein each of the engaging means (44, 46, 144, 146) has a resistance portion (148) in the respective first and second apertures (36, 38) to provide resistance to the movement of the flexible elongate arrangements (12, 14) therethrough.

10. A retaining device according to any of claims 7 to 9, wherein each of the first and second engaging means (44, 46, 144, 146) extends from a first side of the support (28) through a respective one of the apertures (36, 38) to a second side of the support (28), the resistance portion (148) comprising a raised region of the engaging means (44, 46, 144, 146) in the aperture(36, 38).

11. A retaining device according to any of claims 7 to 11, wherein the support (28) defines a respective first opening to each of the apertures (36, 38) on the first side of the support (28) and a respective second opening to each of the apertures (36, 38) on a second side of the support (28), each of the first openings having a first edge region around which the respective engaging means (44, 46, 144, 146) extends and the each of the second openings having a second edge region around which the respective engaging means (44, 46, 144, 146) extends, wherein each of the first edge regions is closer to the respective engaging means (44, 46, 144, 146) than the respective second edge region, and wherein each engaging means (44, 46, 144, 146) comprises a spring wrapped around the respective first and second edge regions.

12. A retaining assembly comprising a retaining device (16, 116) as claimed in any preceding claim, and a flexible elongate arrangement (12, 14) moveable lengthwise relative to the retaining device(16, 116).

13. A retaining assembly according to claim 12, wherein the flexible elongate arrangement (12, 14) comprises a flexible elongate member (18, 20) and a cooperating portion (22, 24, 214) on the flexible elongate member (18, 20), the cooperating portion (22, 24, 214) being configured to engage the engaging means (44, 46, 144, 146).

14. A retaining assembly according to claim 12 or 13, comprising a plurality of flexible elongate arrangements (12, 14) moveable through the retaining device (16, 116), the engaging means (44, 46, 144, 146) comprising a plurality of resiliently deformable engaging means (44, 46, 144, 146), each being configured to engage a respective one of the flexible elongate arrangements (12, 14) to retain the flexible elongate arrangements (12, 14) in respective desired positions relative to the retaining device (16, 116), wherein the support (28) defines a plurality of apertures (36, 38) through each of which a respective one of the flexible elongate arrangements (12, 14) extends.

15. A retaining assembly according to claim 14, wherein a first of the plurality of engaging means (44, 46, 144, 146) is arranged to engage a first of the plurality of flexible elongate arrangements (12, 14) to retain said first flexible elongate arrangement (12, 14) in the desired position relative to the retaining device (16, 116), and a second of the plurality of engaging means (44, 46, 144, 146) is arranged to engage a second of the plurality of flexible elongate arrangements (12, 14) to retain said second flexible elongate arrangement (12, 14) in the desired position relative to the retaining device (16, 116).

## Patentansprüche

1. Haltevorrichtung (16, 116), die eine Stütze (28) zum Stützen mindestens einer flexiblen langgestreckten Aufstellung (12, 14) und Eingriffsmittel (44, 46, 144, 146) an der Stütze (28) zum Ineingriffnehmen der flexiblen langgestreckten Aufstellung (12, 14) umfasst und somit die flexible langgestreckte Aufstellung (12, 14) in Bezug auf die Haltevorrichtung (16, 116) in einer gewünschten Position hält, **dadurch gekennzeichnet, dass** die Eingriffsmittel (44, 46, 144, 146) verformbar sind, um die Bewegung der flexiblen langgestreckten Aufstellung (12, 14) durch die Stütze (28) zu erlauben.

2. Haltevorrichtung nach Anspruch 1, wobei die Stütze (28) einen Rahmen (30) umfasst, durch welchen die flexible langgestreckte Aufstellung (12, 14) sich erstrecken kann und die Stütze (28) ferner ein Montageelement (32) beinhaltet, das sich über den Rahmen (30) erstreckt, wobei die Eingriffsmittel (44, 46, 144, 146) an das Montagelement (32) montiert sind.

3. Haltevorrichtung nach Anspruch 2, wobei die Stütze (28) einen Durchlass (36, 38) definiert, durch welchen die flexible langgestreckte Aufstellung (12, 14) sich erstrecken kann, wobei die Eingriffsmittel (44, 46, 144, 146) einen Widerstandsabschnitt (148) in dem Durchlass (36, 38) aufweisen, um Widerstand gegen die Bewegung der flexiblen langgestreckten Aufstellung (12, 14) dort hindurch bereitzustellen.

4. Haltevorrichtung nach Anspruch 3, wobei die Eingriffsmittel (44, 46, 144, 146) elastisch verformbar sind und ein erstes Ende (147A), das in Bezug auf die Stütze (28) bei Verformung der Eingriffsmittel (44, 46, 144, 146) beweglich ist, sowie ein zweites Ende (147B), das an der Stütze (28) angebracht ist, aufweisen.

5. Haltevorrichtung nach Anspruch 4, wobei die Eingriffsmittel (44, 46, 144, 146) sich von einer ersten Seite der Stütze (28) durch den Durchlass (36, 38) zu einer zweiten Seite der Stütze (28) erstrecken, wobei der Widerstandsabschnitt (148) einen erhöhten Bereich der Eingriffsmittel (44, 46, 144, 146) in dem Durchlass (36, 38) umfasst.

6. Haltevorrichtung nach Anspruch 5, wobei die Stütze (28) eine erste und eine zweite Fläche (164, 166) definiert, der Durchlass (36, 38) sich zwischen der ersten und der zweiten Fläche (164, 166) erstreckt, die Stütze (28) ferner ein entsprechendes erstes Beabstandungselement (168), das von der ersten Fläche (164) vorsteht, und ein zweites Beabstandungselement (170), das von der zweiten Fläche (166) vorsteht, beinhaltet, wobei das erste und das zweite Beabstandungselement (168, 170) bereitgestellt sind, um die Eingriffsmittel (44, 46, 144, 146) von der ersten und der zweiten Fläche (164, 166) zu beabstanden, und wobei das erste und das zweite Beabstandungselement (168, 170) in Bezug aufeinander versetzt sind, das erste Beabstandungselement (168) sich näher an dem Widerstandsabschnitt (148) der Eingriffsmittel als das zweite Beabstandungselement befindet, ein erstes Ende der Eingriffsmittel sich über das entsprechende erste Beabstandungselement (170) erstreckt und das erste Beabstandungselement (168) Führungsausbildungen (178) beinhaltet, um die vorgenannte Bewegung des ersten Endes (147A) der Eingriffsmittel (44, 46, 144, 146) zu führen.

7. Haltevorrichtung nach einem der Ansprüche 4 bis 6, wobei die Haltevorrichtung (16, 116) ein erstes und ein zweites elastisch verformbares Eingriffsmittel (44, 46, 144, 146) umfasst, um eine entsprechende flexible langgestreckte Aufstellung (12, 14) in Eingriff zu nehmen, um jede der flexiblen langgestreckten Aufstellungen (12, 14) in Bezug auf die Haltevorrichtung (16, 116) in entsprechenden gewünschten Positionen zu halten, und wobei die Stütze (28) einen ersten und einen zweiten Durchlass (36, 38) definiert, durch welchen jeweils eine entsprechende flexible langgestreckte Aufstellung (12, 14) sich erstrecken kann.

8. Haltevorrichtung nach Anspruch 7, wobei jedes des ersten und des zweiten Eingriffsmittels (44, 46, 144, 146) ein entsprechendes langgestrecktes elastisch verformbares Element (44, 46, 144, 146) umfasst, wobei jedes des ersten und des zweiten Eingriffsmittels (44, 46, 144, 146) an einem Ende der Stütze (28) angebracht ist.

9. Haltevorrichtung nach Anspruch 7 oder 8, wobei jedes der Eingriffsmittel (44, 46, 144, 146) einen Widerstandsabschnitt (148) in dem entsprechenden ersten und zweiten Durchlass (36, 38) aufweist, um Widerstand gegen die Bewegung der flexiblen langgestreckten Aufstellung (12, 14) dort hindurch bereitzustellen.

10. Haltevorrichtung nach einem der Ansprüche 7 bis 9, wobei jedes des ersten und des zweiten Eingriffsmittels (44, 46, 144, 146) sich von einer ersten Seite der Stütze (28) durch einen entsprechenden der Durchlässe (36, 38) zu einer zweiten Seite der Stütze (28) erstreckt, wobei der Widerstandsabschnitt (148) einen erhöhten Bereich der Eingriffsmittel (44, 46, 144, 146) in dem Durchlass (36, 38) umfasst.

11. Haltevorrichtung nach einem der Ansprüche 7 bis 11, wobei die Stütze (28) eine entsprechende erste Öffnung für jeden der Durchlässe (36, 38) an der ersten Seite der Stütze (28) und eine entsprechende zweite Öffnung für jeden der Durchlässe (36, 38) an einer zweiten Seite der Stütze (28) definiert, wobei jede der ersten Öffnungen einen ersten Kantenbereich aufweist, um den sich die entsprechenden Eingriffsmittel (44, 46, 144, 146) erstrecken, und jede der zweiten Öffnungen einen zweite Kantenbereich aufweist, um den sich die entsprechenden Eingriffsmittel (44, 46, 144, 146) erstrecken, wobei jeder der ersten Kantenbereiche sich näher an den entsprechenden Eingriffsmitteln (44, 46, 144, 146) als der entsprechende zweite Kantenbereich befindet und wobei jedes Eingriffsmittel (44, 46, 144, 146) eine Feder umfasst, die um den entsprechenden ersten und zweiten Kantenbereich gewickelt ist.

12. Halteanordnung, die eine Haltevorrichtung (16, 116) nach einem der vorstehenden Ansprüche und eine flexible langgestreckte Aufstellung (12, 14) umfasst, die in Bezug auf die Haltevorrichtung (16, 116) in Längsrichtung beweglich ist.

13. Halteanordnung nach Anspruch 12, wobei die flexible langgestreckte Aufstellung (12, 14) ein flexibles langgestrecktes Element (18, 20) und einen zusammenwirkenden Abschnitt (22, 24, 214) an dem flexiblen langgestreckten Element (18, 20) umfasst, wobei der zusammenwirkende Abschnitt (22, 24, 214) dazu konfiguriert ist, die Eingriffsmittel (44, 46, 144, 146) in Eingriff zu nehmen.

14. Halteanordnung nach Anspruch 12 oder 13, eine Vielzahl von flexiblen langgestreckten Aufstellungen (12, 14) umfassend, die durch die Haltevorrichtung (16, 116) hindurch beweglich sind, wobei die Eingriffsmittel (44, 46, 144, 146) eine Vielzahl von elastisch verformbaren Eingriffsmitteln (44, 46, 144, 146) umfassen, wobei jedes dazu konfiguriert ist, eine entsprechende der flexiblen langgestreckten Aufstellungen (12, 14) in Eingriff zu nehmen, um die flexiblen langgestreckten Aufstellungen (12, 14) in Bezug auf die Haltevorrichtung (16, 116) in entsprechenden gewünschten Positionen zu halten, wobei die Stütze (28) eine Vielzahl von Durchlässen (36, 38) definiert, durch die sich jeweils eine entsprechende der flexiblen langgestreckten Aufstellungen (12, 14) erstreckt.

15. Halteanordnung nach Anspruch 14, wobei ein erstes der Vielzahl von Eingriffsmitteln (44, 46, 144, 146) angeordnet ist, um eine erste der Vielzahl von flexiblen langgestreckten Aufstellungen (12, 14) in Eingriff zu nehmen, um die erste flexible langgestreckte Aufstellung (12, 14) in Bezug auf die Haltevorrichtung (16, 116) in der gewünschten Position zu halten, und wobei ein zweites der Vielzahl von Eingriffsmitteln (44, 46, 144, 146) angeordnet ist, um eine zweite der Vielzahl von flexiblen langgestreckten Aufstellungen (12, 14) in Eingriff zu nehmen, um die zweite flexible langgestreckte Aufstellung (12, 14) in Bezug auf die Haltevorrichtung (16, 116) in der gewünschten Position zu halten.

## Revendications

1. Dispositif de retenue (16, 116) comprenant un support (28) destiné à supporter au moins un agencement allongé souple (12, 14) et un moyen de mise en prise (44, 46, 144, 146) sur le support (28) destiné à se mettre en prise avec l'agencement allongé souple (12, 14), et retenant ainsi l'agencement allongé souple (12, 14) dans une position souhaitée par rapport au dispositif de retenue (16, 116), **caractérisé en ce que** le moyen de mise en prise (44, 46, 144, 146) est déformable pour permettre ledit mouvement de l'agencement allongé souple (12, 14) à travers le support (28).

2. Dispositif de retenue selon la revendication 1, ledit support (28) comprenant un cadre (30) à travers lequel l'agencement allongé souple (12, 14) peut s'étendre, et ledit support (28) comprenant en outre un élément de montage (32) s'étendant à travers le cadre (30), ledit moyen de mise en prise (44, 46, 144, 146) étant monté sur l'élément de montage (32).

3. Dispositif de retenue selon la revendication 2, ledit support (28) définissant une ouverture (36, 38) à travers laquelle l'agencement allongé souple (12, 14) peut s'étendre, ledit moyens de mise en prise (44, 46, 144, 146) possédant une partie résistance (148) dans l'ouverture (36, 38) pour offrir une résistance au mouvement de l'agencement allongé souple (12, 14) à travers celle-ci.

4. Dispositif de retenue selon la revendication 3, ledit moyen de mise en prise (44, 46, 144, 146) étant déformable élastiquement et possédant une première extrémité (147A) mobile par rapport au support (28) lors de la déformation du moyen de mise en prise (44, 46, 144, 146) et une seconde extrémité (147B) fixée au support (28).

5. Dispositif de retenue selon la revendication 4, ledit moyen de mise en prise (44, 46, 144, 146) s'étendant à partir d'un premier côté du support (28) à travers l'ouverture (36, 38) jusqu'à un second côté du support (28), ladite partie de résistance (148) comprenant une zone surélevée du moyen de mise en prise (44, 46, 144, 146) dans l'ouverture (36, 38).

6. Dispositif de retenue selon la revendication 5, ledit support (28) définissant des première et seconde faces (164, 166), ladite ouverture (36, 38) s'étendant entre les première et seconde faces (164, 166), ledit support (28) comprenant en outre un premier élément d'espacement respectif (168) faisant saillie à partir de la première face (164) et un second élément d'espacement (170) faisant saillie à partir de la seconde face (166), lesdits premier et second éléments d'espacement (168, 170) étant disposés pour espacer lesdits moyens de mise en prise (44, 46, 144, 146) des première et seconde faces (164, 166) et lesdits premier et second éléments d'espacement (168, 170) étant décalés l'un par rapport à l'autre, ledit premier élément d'espacement (168) étant plus proche de la partie résistance (148) du moyen de mise en prise que le second élément d'espacement, ladite première extrémité du moyen de mise en prise s'étendant à travers le premier élément d'espacement (170) respectif, et ledit premier élément d'espacement (168) comprenant des formations de guidage (178) pour guider le mouvement susmentionné de la première extrémité (147A) du moyen de mise en prise (44, 46, 144, 146).

7. Dispositif de retenue selon l'une quelconque des revendications 4 à 6, ledit dispositif de retenue (16, 116) comprenant des premier et second moyens de mise en prise déformables élastiquement (44, 46, 144, 146) pour venir en prise avec un agencement allongé souple respectif (12, 14) pour retenir chacun des agencements allongés souples (12, 14) dans des positions souhaitées respectives par rapport au dispositif de retenue (16, 116) et ledit support (28) définissant des première et seconde ouvertures (36, 38) à travers chacune desquelles un agencement allongé souple (12, 14) respectif peut s'étendre.

8. Dispositif de retenue selon la revendication 7, chacun des premier et second moyens de mise en prise (44, 46, 144, 146) comprenant un élément déformable élastique allongé (44, 46, 144, 146) respectif, chacun des premier et second moyens de mise en prise (44, 46, 144, 146) étant fixés au support (28) au niveau d'une extrémité.

9. Dispositif de retenue selon la revendication 7 ou 8, chacun des moyens de mise en prise (44, 46, 144, 146) possédant une partie résistance (148) dans les première et seconde ouvertures (36, 38) respectives pour offrir une résistance au mouvement des agencements allongés souples (12, 14) à travers celles-ci.

10. Dispositif de retenue selon l'une quelconque des revendications 7 à 9, chacun des premier et second moyens de mise en prise (44, 46, 144, 146) s'étendant depuis un premier côté du support (28) à travers une ouverture respective parmi les ouvertures (36, 38) jusqu'à un second côté du support (28), ladite partie résistance (148) comprenant une zone surélevée du moyen de mise en prise (44, 46, 144, 146) dans l'ouverture (36, 38).

11. Dispositif de retenue selon l'une quelconque des revendications 7 à 11, ledit support (28) définissant une première ouverture respective pour chacune des ouvertures (36, 38) sur le premier côté du support (28) et une seconde ouverture respective pour chacune des ouvertures (36, 38) sur un second côté du support (28), chacune des premières ouvertures possédant une première zone de bord autour de laquelle le moyen de mise en prise (44, 46, 144, 146) respectif s'étend et chacune des secondes ouvertures possédant une seconde zone de bord autour de laquelle les moyens de mise en prise (44, 46, 144, 146) respectifs s'étendent, chacune des premières zones de bord étant plus proche du moyen de mise en prise (44, 46, 144, 146) respectif que la seconde zone de bord respective, et chaque moyen de mise en prise (44, 46, 144, 146) comprenant un ressort enroulé autour des premières et secondes zones de bord respectives.

12. Ensemble de retenue comprenant un dispositif de retenue (16, 116) selon l'une quelconque des revendications précédentes, et un agencement allongé souple (12, 14) mobile selon la direction de la longueur par rapport au dispositif de retenue (16, 116).

13. Ensemble de retenue selon la revendication 12, ledit agencement allongé souple (12, 14) comprenant un élément allongé souple (18, 20) et une partie coopérante (22, 24, 214) sur l'élément allongé souple (18, 20), ladite partie coopérante (22, 24, 214) étant conçue pour venir en prise avec les moyens de mise en prise (44, 46, 144, 146).

14. Ensemble de retenue selon la revendication 12 ou 13, comprenant une pluralité d'agencements allongés souples (12, 14) mobiles à travers le dispositif de retenue (16, 116), lesdits moyens de mise en prise (44, 46, 144, 146) comprenant une pluralité de moyens de mise en prise déformables élastiquement (44, 46, 144, 146), chacun étant conçu pour se mettre en prise ave un agencement allongé souple respectif parmi les agencements allongés souples (12, 14) afin de retenir les agencements allongés souples (12, 14) dans des positions souhaitées respectives par rapport au dispositif de retenue (16, 116), ledit support (28) définissant une pluralité d'ouvertures (36, 38) à travers chacune desquelles s'étend l'un des agencements allongés souples (12, 14) respectifs.

15. Ensemble de retenue selon la revendication 14, un premier moyen de mise en prise de la pluralité de moyens de mise en prise (44, 46, 144, 146) étant agencé pour venir en prise avec un premier agencement allongé souple de la pluralité d'agencements allongés souples (12, 14) afin de retenir ledit premier agencement allongé souple (12, 14) dans la position souhaitée par rapport au dispositif de retenue (16, 116) et un second moyen de mise en prise de la pluralité de moyens de mise en prise (44, 46, 144, 146) étant conçu pour venir en prise avec un second agencement allongé souple de la pluralité d'agencements allongés souples (12, 14) pour retenir ledit second agencement allongé souple (12, 14) dans la position souhaitée par rapport au dispositif de retenue (16, 116).
